# EUROPÄISCHE PATENTANMELDUNG

(11) **EP 1 396 512 A1**
(43) Veröffentlichungstag der Anmeldung: **10.03.2004**
(21) Anmeldenummer: 02360259.2
(22) Anmeldetag: 04.09.2002
(51) Int. Cl.: C08G 18/36, C08G 18/76, C08G 18/69

(54) **Verwendung von Polyurenthan-Vergussmassen für kraft-und momentübertragende Verbindungen zu Materialien, die Feuchtigkeit enthalten können und so erhaltene Konstruktionen**

(71) Anmelder: Collano AG, 6203 Sempach-Station (CH)
(72) Erfinder: Stoffel, Florian, 6203 Sempach-station (CH); Gabriel, Joseph, 6018 Buttisholz (CH); Lidin, Catherine, 6213 Knutwil (CH)
(74) Vertreter: Nuss, Pierre

(57) **Zusammenfassung**

Die vorliegende Erfindung betrifft die Verwendung einer polyhydroxyfunktionellen Verbindung oder eines Gemisches aus solchen Verbindungen zur Herstellung einer 2-Komponenten Vergussmasse auf Basis von Polyurethan, dadurch gekennzeichnet, dass die polyhydroxyfunktionelle Verbindung oder das Gemisch daraus einen hydrophoben Charakter aufweist, indem mindestens eine hydrophobe polyhydroxyfunktionelle Verbindung verwendet wird, die mit mindestens einem Polyisocyanat zur Reaktion gebracht wird.

Eine solche Vergussmasse ist besonders vorteilhaft zur kraftund/oder momentübertragenden Verbindung und/oder Verstärkung von feuchtigkeitsenthaltenden Substraten. Die so erhaltenen Konstruktionen weisen im Vergleich zu den bekannten Konstruktionen zumindest gleich gute oder bessere mechanische Eigenschaften auf.

## Beschreibung

Die vorliegende Erfindung betrifft das Gebiet der Polyurethan-Chemie, insbesondere Polyurethan-Vergussmassen oder sogenannte Giessharze und deren Verwendung für kraft- und momentübertragende Verbindungen zu Materialien, insbesondere solche, die Feuchtigkeit enthalten können.

2-Komponenten-Vergussmassen (auch 2K-Vergussmassen oder 2K-Giessharze genannt) auf Basis von Polyurethanen sind seit langem bekannt [Günter Oertel, Polyurethane - Kunststoff Handbuch 7, Carl Hanser Verlag München Wien 1993]. Sie werden hergestellt, indem prinzipiell eine Polyolkomponente und eine Isocyanatkomponente miteinander zur Reaktion gebracht werden.

Die Polyolkomponente ist üblicherweise dem Anforderungsprofil der Vergussmasse entsprechend formuliert wobei die Rohstoffe, Eigenschaften und Herstellungsverfahren dem Fachmann allgemein bekannt sind.

Zum Einsatz können ggf. auch Zusatzstoffe wie Füllstoffe, Rheologiehilfsmittel, Benetzungsmittel, Katalysatoren, usw., bei der Formulierung kommen. Solche Zusätze sind ebenfalls vom Endresultat abhängig und dem Fachmann weitgehend bekannt.

Bei den 2K-Vergussmassen gemäss dem Stand der Technik kommen als Isocyanatkomponente allgemein alle kommerziell erhältlichen Di- oder Polyisocyanate in Betracht (MDI, TDI, IPDI, usw.).

Vergussmassen sind von der chemischen Zusammensetzung her ähnlich oder gar identisch mit Klebstoffen. Der Hauptunterschied besteht jedoch in der Anwendung: während Klebstoffe üblicherweise in dünnen Schichten auf ein Substrat aufgetragen und unter Pressdruck mit dem zu verbindenden 2. Substrat aushärten, werden Giessharze eingesetzt, wo es darum geht, Hohlräume auszufüllen. In solchen Fällen ist es auch nicht möglich, einen Pressdruck aufrecht zu erhalten. Je nach Anwendung werden Giessharze mit einem hohen E-Modul und geringer Dehnung bis zu Systemen mit tiefem E-Modul und hoher Elastizität benötigt.

2K-Polyurethan-Giessharze werden üblicherweise nur dort eingesetzt, wo die Substrate keine Feuchtigkeit enthalten (z.B. Elektrovergussmassen, Filterverguss usw..., bei denen vorwiegend Metalle und Kunststoffe zum Einsatz kommen), weil es sehr schwierig ist, die Isocyanat-Wasser-Reaktion vollständig zu unterdrücken.

Wenn Materialien Feuchtigkeit enthalten, werden vorwiegend Epoxysysteme eingesetzt, weil sie unempfindlich gegenüber Feuchtigkeit sind. Dies sind vor allem Holzwerkstoffe, aber auch Beton und zementgebundene Werkstoffe. Insbesondere wenn Holz oder Holzwerkstoffe (OSB-Platten, Sperrholzplatten, Furnierschichtplatten, Wood Composites, Kork usw...) eingesetzt werden, bei denen es sehr schwierig oder unmöglich ist, die Feuchtigkeit vollständig fernzuhalten, sind die üblichen Polyurethane auf Basis von Polyether und/oder Polyesterpolyolen nicht geeignet. Trotzdem wurden herkömmliche Zweikomponenten-PUR-Vergussmassen bereits als Alternative zu den Epoxidharzen geprüft [Comparison of Pull-out Strenghts of 12 Adhesives for Glued -in Rods for Timber Structures, Martin Kemmsies, SP Report 1999:00]. Dabei zeigte sich die Problematik, dass bei diesen Systemen durch die Reaktion der Isocyanatkomponente mit der Holzfeuchtigkeit in der Grenzschicht CO₂-Gasblasen gebildet werden. Durch diese Nebenreaktion wird der Verbund bedeutend geschwächt und die Verbindung ist dadurch schlecht kontrollierbar und reproduzierbar.

Für die Verbindung und Befestigung von Elementen und Teilen im Ingenieurbau werden zunehmend mechanische Befestigungsmittel wie Schrauben, Bolzen, Dübel oder Nägel durch Klebverbindungen ersetzt. Bei der mechanischen Befestigung wird jedoch häufig das Material durch die lokalen mechanischen Einwirkungen verletzt und geschwächt. Durch die Verwendung von Vergussmassen können kraftschlüssige Verbindungen mit Fugendicken bis zu mehreren Zentimetern erzeugt werden.

Um mit einer Vergussmasse eine gute Kraftübertragung zwischen den Fügeteilen zu gewährleisten, muss sie im ausgehärteten Zustand eine hohe Festigkeit aufweisen. Die Verbindung wird aber bedeutend geschwächt, wenn Lufteinschlüsse oder Schaumstrukturen (Porosität) in der ausgehärteten Klebefuge vorhanden sind.

Der Erfindung liegt somit die Aufgabe zugrunde, eine Vergussmasse auf Basis von Polyurethan anzubieten, die gegenüber der Feuchtigkeit der Materialien, die mit ihr in Kontakt kommen, sehr wenig empfindlich ist. Dadurch soll es möglich sein, irgendwelche organische oder anorganische Materialien (Metalle, Kunststoffe usw..., aber auch holzartige Materialien) mit kompatiblen Holzwerkstoffen kraft- und/oder momentübertragend zu verbinden.

Es sollten dabei vorzugsweise mindestens die Festigkeitswerte erreicht werden, die von den entsprechenden Normen festgelegt sind und/oder bisher nur von Epoxysystemen erreicht wurden.

Überraschenderweise konnte die Aufgabe gelöst werden, indem eine Verwendung einer polyhydroxyfunktionellen Verbindung oder eines Gemisches aus solchen Verbindungen zur Herstellung einer 2-Komponenten Vergussmasse auf Basis von Polyurethan vorgeschlagen wurde, die dadurch gekennzeichnet ist, dass die polyhydroxyfunktionelle Verbindung oder das Gemisch daraus einen hydrophoben Charakter aufweist, indem mindestens eine hydrophobe polyhydroxyfunktionelle Verbindung verwendet wird, die mit mindestens einem Polyisocyanat zur Reaktion gebracht wird.

Durch diese Massnahme kann die systembedingte, durch die Urethan- und Harnstoffgruppen verursachte Hydrophilie der Polyurethansysteme kompensiert werden. Die Blasenbildung an der Grenzfläche zu einem Feuchtigkeit enthaltenden Material wird unterdrückt, was zu deutlich verbesserten Auszugs- und Druckfestigkeiten führt. Durch die dem Fachmann bekannten, äusserst vielfältigen Formulierungsmöglichkeiten in der Polyurethan-Chemie ist es dank der vorliegenden Erfindung nun möglich, Vergussmassen herzustellen, die bezüglich E-Modul, Shore-Härte und anderer physikalischer Eigenschaften auf den jeweiligen Anwendungszweck hin optimiert sind.

Diese Möglichkeit existierte bei den bisher eingesetzten Epoxysystemen nur in sehr eingeschränktem Mass.

Weitere vorteilhafte Ausgestaltungen der Erfindung sind den Unteransprüchen zu entnehmen.

Bevorzugte Anwendungsgebiete für die erfindungsgemässen Vergussmassen sind unter anderem Verguss, Verbindung und Verstärkung in den folgenden Bereichen:
- (Holz)Bau: eingeleimte Gewindestangen, Rahmenecken, Metallknoten usw...,
- andere (Holz)Konstruktionen: Gerüste, Regale, Brücken usw...,
- Fahrzeugbau: Boote, Waggons, Aufbauten usw...,
- Sanierungen bestehender Bauten,
- Spielgeräte, Möbel, usw...

Eines der wichtigsten Einsatzgebiete ist das Einleimen von Gewindestangen oder Betonrippenstähle in Holz oder Beton. Dabei muss die Leistung des Verbundes so ausgelegt sein, dass bei einer axialen Beanspruchung die Versagesart immer im Materialbruch der Substrate liegt. Derart hochfeste Verbindungen konnten vor allem nur mit Epoxidharzen erzeugt werden. Beim Einsatz mit Epoxidharzen ist man aber mit folgenden Problemen konfrontiert:
- durch die starre, spröde Verbindung resultieren hohe Spannungsspitzen im Verbund,
- bei der Aushärtung kann in der Klebeschicht ein Schwund auftreten,
- die Adhäsion auf Holz kann zum Teil ungenügend sein,
- tiefe Viskosität (insbesondere bei warmhärtenden Systemen) führen u. a. zu schlechten Handhabungseigenschaften.

Gemäss einem ersten Merkmal ist die erfindungsgemässe Verwendung dadurch gekennzeichnet, dass die hydrophobe polyhydroxyfunktionelle Verbindung oder Verbindungen aus der folgenden Gruppe ausgewählt sind: hydroxyfunktionelle Öle, Fette oder Fettsäuren, insbesondere natürliche Öle, Fette oder Fettsäuren, bzw. deren di- und/oder trimerisierten und/oder durch Veresterung und/oder Veretherung erhaltenen Derivaten, hydroxyfunktionelle oligomere Polyalkane und hydroxyfunktionelle oligomere Polyolefine.

Als hydrophobe Polyole besonders geeignet sind hydroxyfunktionelle natürliche Oele, wie z.B. Ricinusöl oder Fette, bzw. Derivate davon. Als Basis für diese Derivate dienen C₉- C₂₂-Fettsäuren, die durch Di- oder Trimerisierung und/oder durch Veresterung bzw. Veretherung modifiziert werden.

Desweiteren eignen sich hydroxyfunktionelle, oligomere Polyalkane oder Polyolefine für diese Anwendung.

Vorzugsweise sind die besagten Polyole oder hydroxyfunktionelle Verbindungen dadurch gekennzeichnet, dass sie ein OH-Gehalt zwischen 1,0 % und 16,0 % aufweisen. Der OH-Gehalt wird nach den, dem Fachmann bekannten und in der PU-Chemie gängigen Messmethoden bestimmt.

Gemäss einer weiteren vorteilhaften Ausführungsform ist die Verwendung dadurch gekennzeichnet, dass die hydrophobe polyhydroxyfunktionelle Verbindung in Mengen von 15 bis 70 Gew. %, vorzugsweise 20 bis 50 Gew. % und insbesondere 30 bis 40 Gew. % bezogen auf die gesamte Mischung der beiden Komponenten verwendet wird.

Insbesondere wird die erfindungsgemässe Polyurethan-Vergussmasse zur kraft- und/oder momentübertragenden Verbindung und/oder Verstärkung von feuchtigkeitsenthaltenden Substraten eingesetzt.

Bei der Verbindung von Elementen weist mindestens ein der besagten Elemente einen Feuchtigkeitsgehalt zwischen 1,0 Gew. % und 60 Gew. %, vorzugsweise zwischen 5 und 20 Gew. % und insbesondere zwischen 8 und 15 Gew. % auf.

Die Vergussmasse zur Verbindung oder Verstärkung von feuchtigkeitsenthaltenden Materialien wird für solche eingesetzt die aus folgender Gruppe ausgewählt werden: Holz oder Materialien, welche ganz oder teilweise aus Holz und/oder Holzbestandteilen hergestellt sind, Materialien, welche aus Pflanzen hergestellt sind, mineralische Materialien, insbesondere Beton oder Beton enthaltende Materialien.

Laut einer weiteren Ausgestaltungsform wird die erfindungsgemässe Polyurethan-Vergussmasse zur Einleimung von metallischen Körpern oder Kunststoffteilen, insbesondere metallischer Stangen, wie z.B. metallischer Gewindestangen, in Beton oder in auf Holz basierten Baustoffen eingesetzt.

Ein weiterer Gegenstand der vorliegenden Erfindung ist eine Zweikomponenten-Polyurethan-Vergussmasse, hergestellt aus der Reaktion zwischen mindestens einer polyhydroxyfunktionellen Komponente mit einer Isocyanat-Komponente, dadurch gekennzeichnet, dass die polyhydroxyfunktionelle Verbindung oder das Gemisch davon einen hydrophoben Charakter aufweist, indem sie/es mindestens eine hydrophobe polyhydroxyfunktionelle Verbindung einschliesst.

Vorteilhafterweise ist diese Zweikomponenten-Polyurethan-Vergussmasse dadurch gekennzeichnet, dass bei der Abmischung einer Menge von 20 g, bestehend aus den beiden Komponenten mit 0,50 g Wasser, bei 20°C, durch die Polymerisationsreaktion weniger als 200 ml CO₂-Gasvolumen gebildet wird.

Ausserdem ist die erfindungsgemässe Zweikomponenten-Polyurethan-Vergussmasse dadurch gekennzeichnet, dass das stöchiometrische Verhältnis der NCO-Gruppen zu den OH-Gruppen der Mischung zwischen 0,90 bis 1,30, vorzugsweise zwischen 1,00 und 1,20 und insbesondere zwischen 1,05 und 1,15 liegt.

Ein weiterer Gegenstand der vorliegenden Anmeldung ist eine Konstruktion bestehend aus mindestens zwei miteinander verbundenen und/oder verstärkten, feuchtigkeitsenthaltenden Bauteilen, dadurch gekennzeichnet, dass zur Verbindung bzw. Verstärkung der Bauteile eine Polyurethan-Vergussmasse nach einem oder mehreren der Ansprüche 1 bis 12 verwendet wird.

Die Erfindung wird nun anhand der folgenden Ausführungsbeispiele näher erläutert.

### Beispiele :

### a) Formulierungen

Die nachfolgenden Beispiele beziehen sich auf Formulierungen mit nur einer Type Polyol. Bei Bedarf (z.B. Erhöhung des E-Moduls) können die verschiedenen Typen kombiniert werden.

Falls nicht anders angegeben, beziehen sich alle Prozentangabe auf Gewichtsanteile.

| | | |
|---|---|---|
| Komponente A | Polyol (vgl. Tabelle 1) | 50,2 % |
| | Zeolith (3 Å) | 4 % - 10 % |
| | Pyrogene Kieselsäure | 0,7 % |
| | Calciumcarbonat | 38 % - 45 % |
| | Entschäumer | 0,5 % |
| | Katalysator | (bei Bedarf) |
| Komponente B | Polymeres Diphenylmethan-diisocyanat | |
| | (PMDI, z.B. Desmodur VK von Bayer) | |
| Stöchiometrisches Verhältnis NCO/OH | | 1,10 |

**Tabelle 1:**

| Formulierungen mit verschiedenen Polyol-Typen | | |
|---|---|---|
| Beispiel Nr. | Polyol Typ | OH Zahl |
| 1 | Fettsäureester, verzweigt (Sovermol 750 von Cognis) ohne Katalysator | 315 |
| 2 | Dimerisierte Fettsäure (Pripol 2033 von Uniqema) | 207 |
| 3 | Polybutadien (PolyBd R-45HT von Elf Atochem) | 37 |
| 4 | Rizinusöl | 160 |
| 5 | Polyether Polyol (Desmophen 1380 BT von Bayer) | 385 |
| 6 | Fettsäureester, verzweigt (Sovermol 750 von Cognis mit Aminkatalysator) | 315 |

Mit dem Beispiel 5 wird ein Polyether Polyol (nicht hydrophob = nicht geeignet für die erfindungsgemässen Vergussmassen) beschrieben, um einen Vergleich zu zeigen.

### b) Mechanische Eigenschaften

**Tabelle 2:**

| Mechanische Eigenschaften bei 20°C | | | | |
|---|---|---|---|---|
| Beispiel Nr. | Topfzeit [Min] | E Modul [MPa] | Dehnung in % | Shore D |
| 1 | 30 | 1960 | 2 | 84 |
| 2 | 12 | 30 | 110 | 55 |
| 3 | 95 | 3,5 | 150 | 17 |
| 4 | 75 | 14 | 30 | 40 |
| 5 | 105 | 2500 | 1,8 | 86 |
| 6 | 20 | 2000 | 1,9 | 84 |

Beispiele 3 und 4 sind nur für Vergussmassen mit einem niedrigen E-Modul geeignet. Diese Polyole können aber mit anderen Typen abgemischt werden. Beispiel 5 zeigt sehr gute mechanische Eigenschaften. Wegen seiner schlechten Hydrophobie schäumt das Produkt aber zu stark im Kontakt mit Holz und hat deswegen eine schlechte Klebfestigkeit.

### c) Untersuchung der CO₂ Entwicklung

Eine Menge von 20 g Vergussmasse (o. g. Komponenten A und B homogen vermischt) wurde mit 0,50 g Wasser gemischt und das Gas-Volumen des durch die Konkurrenzreaktion mit Wasser gebildeten CO₂-Gases gemessen.

**Tabelle 3:**

| Ergebnisse der CO₂ Messung | |
|---|---|
| Beispiel Nr | CO₂ Volumen |
| 1 | 150 ml |
| 2 | 40 ml |
| 3 | 1 ml |
| 4 | 70 ml |
| 5 | 250 ml |
| 6 | 110 ml |

Mit den erfindungsgemässen hydrophoben Polyolen (Beispiele 1 bis 4) wird signifikant weniger CO₂ gebildet als mit den hydrophilen Polyolen (Beispiel 5) aus dem Stand der Technik. Ausserdem wurde festgetellt, dass beim hydrophilen Polyol die CO₂-Entwicklung sehr schnell und intensiv einsetzt und dann beendet ist, während sie bei den hydrophoben Typen eher langsam und über den ganzen Aushärtungszeitraum verteilt stattfindet.

### d) Anwendungsbeispiel: eingeleimte Gewindestangen

### Vergleichsmessung von eingeleimten Gewindestangen in Esche:

### Prüfkörper

| | |
|---|---|
| Esche | Querschnitt: Höhe = 100 mm / Breite = 80 mm |
| Gewindestangen | Durchmesser M12 |
| | Stahlqualität: 8,8 |
| Bohrung | Durchmesser = 14 mm ; Bohrung senkrecht zum Faserverlauf |
| Einleimlänge | 80 mm |

Die eingeleimten Gewindestangen werden anschliessend bei 20 °C 16 Tage lang bis zur Prüfung gelagert. Die Ergebnisse der Tests, die gemäss dem in der Einleitung zitierten Protokoll durchgeführt wurden, werden in folgender Tabelle zusammengefasst.

**Tabelle 4:**

| Ergebnisse der Zugprüfungen | | | |
|---|---|---|---|
| Beispiel Nr. | hydr. Druck [bar] | Ausziehkraft [kN] | Scherfestigkeit [N/mm²] |
| 1 | 99,3 | 45,1 | 15,0 |
| 6 | 119,7 | 54,3 | 18,0 |
| 2 | 84,7 | 38,5 | 12,8 |
| Epoxidharze | 100 - 135 | 45,4 - 61,3 | 15,0 - 20,3 |

Bei Epoxidharzen (spezielle Formulierungen für Gewindestangen) werden bei dieser Prüfanordnung Druckwerte von 100-135 bar erzielt. Mit den erfindungsgemässen Produkten gemäss den Beispielen 1 und 6 können diese Festigkeiten erreicht werden. Beispiel 2 weist auch noch ausreichende Werte auf, die es für diese Anwendung ebenfalls (wenn auch bedingt) tauglich machen.

Selbsverständlich ist die Erfindung nicht auf die beschriebenen und dargestellten Ausführungsformen begrenzt. Änderungen, z. B. in den Ausführungformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Verwendung einer polyhydroxyfunktionellen Verbindung oder eines Gemisches aus solchen Verbindungen zur Herstellung einer 2-Komponenten Vergussmasse auf Basis von Polyurethan, **dadurch gekennzeichnet, dass** die polyhydroxyfunktionelle Verbindung oder das Gemisch daraus einen hydrophoben Charakter aufweist, indem mindestens eine hydrophobe polyhydroxyfunktionelle Verbindung verwendet wird, die mit mindestens einem Polyisocyanat zur Reaktion gebracht wird.

2. Verwendung nach Anspruch 1, **dadurch gekennzeichnet, dass** die hydrophobe polyhydroxyfunktionelle Verbindung oder Verbindungen aus der folgenden Gruppe ausgewählt sind: hydroxyfunktionelle Öle, Fette oder Fettsäuren, insbesondere natürliche Öle, Fette oder Fettsäuren, bzw. deren di- und/oder trimerisierten und/oder durch Veresterung und/oder Veretherung erhaltenen Derivaten, hydroxyfunktionelle oligomere Polyalkane und hydroxyfunktionelle oligomere Polyolefine.

3. Verwendung nach Anspruch 1 oder 2, **dadurch gekennzeichnet, dass** die hydoxyfunktionelle Verbindungen C₉ bis C₂₂ Verbindungen sind.

4. Verwendung nach einem oder mehreren der vorhergehenden Ansprüche 1 bis 3, **dadurch gekennzeichnet, dass** die hydroxyfunktionelle Verbindung ein OH-Gehalt zwischen 1,0 % und 16,0 % aufweist.

5. Verwendung nach einem oder mehreren der vorhergehenden Ansprüche 1 bis 4, **dadurch gekennzeichnet, dass** die hydrophobe polyhydroxyfunktionelle Verbindung in Mengen von 15 bis 70 Gew. %, vorzugsweise 20 bis 50 Gew. % und insbesondere 30 bis 40 Gew. % bezogen auf die gesamte Mischung der beiden Komponenten verwendet wird.

6. Verwendung nach einem oder mehreren der vorhergehenden Ansprüche 1 bis 5, **dadurch gekennzeichnet, dass** die Polyurethan-Vergussmasse zur kraft- und/oder momentübertragenden Verbindung und/oder Verstärkung von feuchtigkeitsenthaltenden Substraten eingesetzt wird.

7. Verwendung nach einem oder mehreren der vorhergehenden Ansprüche 1 bis 6, **dadurch gekennzeichnet, dass** die Polyurethan-Vergussmasse zur Verbindung von Elementen verwendet wird, wobei mindestens ein der besagten Elemente einen Feuchtigkeitsgehalt zwischen 1,0 Gew. % und 60 Gew. %, vorzugsweise zwischen 5 und 20 Gew. % und insbesondere zwischen 8 und 15 Gew. % aufweist.

8. Verwendung nach Anspruch 6 oder 7, **dadurch gekennzeichnet, dass** die Vergussmasse zur Verbindung oder Verstärkung von feuchtigkeitsenthaltenden Materialien eingesetzt wird die aus folgender Gruppe ausgewählt werden: Holz oder Materialien, welche ganz oder teilweise aus Holz und/oder Holzbestandteilen hergestellt sind, Materialien, welche aus Pflanzen hergestellt sind, mineralische Materialien, insbesondere Beton oder Beton enthaltende Materialien.

9. Verwendung nach einem oder mehreren der Ansprüche 6 bis 8, **dadurch gekennzeichnet, dass** die Polyurethan-Vergussmasse zur Einleimung von metallischen Körpern oder Kunststoffteilen, insbesondere metallischer Stangen, wie z.B. metallischer Gewindestangen, in Beton oder in, auf Holz basierten, Baustoffen eingesetzt wird.

10. Zweikomponenten-Polyurethan-Vergussmasse, hergestellt aus der Reaktion zwischen mindestens einer polyhydroxyfunktionellen Komponente mit einer Isocyanat-Komponente **dadurch gekennzeichnet, dass** die polyhydroxyfunktionelle Verbindung oder das Gemisch davon einen hydrophoben Charakter aufweist, indem sie/es mindestens eine hydrophobe polyhydroxyfunktionelle Verbindung einschliesst.

11. Zweikomponenten-Polyurethan-Vergussmasse nach Anspruch 10 **dadurch gekennzeichnet, dass** bei der Abmischung einer Menge von 20 g, bestehend aus den beiden Komponenten mit 0,50 g Wasser, bei 20°C, durch die Polymerisationsreaktion weniger als 200 ml CO₂-Gasvolumen gebildet wird.

12. Zweikomponenten-Polyurethan-Vergussmasse nach Anspruch 10 oder 11 **dadurch gekennzeichnet, dass** das stöchiometrische Verhältnis der NCO-Gruppen zu den OH-Gruppen der Mischung zwischen 0,90 bis 1,30, vorzugsweise zwischen 1,00 und 1,20 und insbesondere zwischen 1,05 und 1,15 liegt.

13. Konstruktion bestehend aus mindestens zwei miteinander verbundenen und/oder verstärkten, feuchtigkeitsenthaltenden Bauteilen, **dadurch gekennzeichnet, dass** zur Verbindung bzw. Verstärkung der Bauteile eine Polyurethan-Vergussmasse nach einem oder mehreren der Ansprüche 1 bis 12 verwendet wird.
